# FASCICULE DE BREVET EUROPEEN

(11) **EP 2 111 324 B1**
(45) Date de publication et mention de la délivrance du brevet: **24.04.2019**
(21) Numéro de dépôt: 08761804.7
(22) Date de dépôt: 25.01.2008
(51) Int. Cl.: B23P 19/04, B23P 21/00, E05B 17/00

(54) **POSTE DE FERRAGE DE MENUISERIES ET PROCEDE CORRESPONDANT**
STATION UND ENTSPRECHENDES VERFAHREN ZUR SCHARNIERUNG VON SCHREINERHANDWERK
JOINERIES INSTALLATION WORKSTATION AND CORRESPONDING METHOD

(30) Priorité: 25.01.2007 FR 0700512
(43) Date de publication de la demande: 28.10.2009
(73) Titulaire: Moini, Cyrus Bruno Hassan, 01000 Bourg en Bresse (FR)
(72) Inventeur: Moini, Cyrus Bruno Hassan, 01000 Bourg en Bresse (FR)
(74) Mandataire: Weber, Jean-François
(86) Numéro de dépôt international: PCT/FR2008/000091
(87) Numéro de publication internationale: WO 2008/110678

(56) Documents cités:
- DE-A1- 19 922 227
- DE-U1- 20 022 490
- US-A- 3 381 725
- US-A- 4 785 531

## Description

### DOMAINE TECHNIQUE

La présente invention se rapporte au domaine des machines de ferrage intervenant dans la fabrication d'éléments de menuiserie notamment destinés au secteur du bâtiment.

Plus précisément, la présente invention concerne un dispositif de ferrage de menuiseries destiné à la pose de ferrures, telles que des crémones, paumelles ou gâches, sur des cadres d'éléments de menuiseries, tel que des dormants ou des ouvrants de portes ou de fenêtres, ledit dispositif comprenant :
- un support de cadre agencé pour maintenir le cadre à ferrer,
- un bras de positionnement pourvu d'un moyen de préhension apte à saisir une ferrure en vue de sa pose sur ledit cadre, ledit bras de positionnement étant conçu pour positionner le moyen de préhension par rapport au cadre de telle sorte que la ferrure tenue par ledit moyen de préhension se présente en regard d'un emplacement prédéterminé dudit cadre prévu pour recevoir ladite ferrure.

La présente invention concerne également un procédé de ferrage de menuiseries destiné à être mis en oeuvre au sein d'un dispositif de ferrage de menuiseries comprenant un bras de positionnement pourvu d'un moyen de préhension apte à saisir une ferrure en vue de sa pose sur un cadre d'élément de menuiserie.

Le document US-3,381,725 A décrit un dispositif destiné à l'insertion d'éléments de raccordement dans des fenêtres, portes et leurs cadres.

La présente invention concerne enfin un support pouvant être lu par un ordinateur sur lequel est enregistré un programme informatique comprenant un moyen de code de programme informatique adapté pour exécuter les étapes d'un procédé de ferrage de menuiseries.

### TECHNIQUE ANTERIEURE

Dans le secteur de la construction, il est connu de pratiquer des ouvertures dans les bâtiments de manière à permettre leur accès, leur éclairage ou encore leur ventilation.

De façon bien connue, de telles ouvertures sont généralement pourvues d'éléments de menuiserie, tels que des portes ou des fenêtres, lesquels comportent généralement un cadre fixé à la maçonnerie, dit « *dormant* », sur lequel viennent s'articuler un ou plusieurs cadres mobiles dit « *ouvrants* ».

Les cadres connus sont généralement réalisés dans un matériau rigide résistant aux intempéries, tel que du bois traité, de l'aluminium, ou encore du plastique de type PVC.

Pour autoriser et contrôler la mobilité des ouvrants par rapport aux dormants, il est nécessaire de doter les cadres de pièces métalliques de guidage, d'articulation ou de verrouillage connues sous le nom générique de « *ferrures* ». L'opération qui consiste à poser lesdites ferrures sur les cadres est appelée « *ferrage* ».

Afin de produire des menuiseries en quantité suffisante pour satisfaire la demande du marché de la construction et de la rénovation, les opérations de ferrage ont été standardisées et industrialisées.

A cette fin, il est connu d'avoir recours à des machines de ferrage automatiques qui sont à même de positionner et de fixer les ferrures nécessaires sur un cadre de menuiserie déterminé à une cadence élevée et en présentant une bonne reproductibilité.

En particulier, il est connu d'utiliser des machines de ferrage comportant une table horizontale sur laquelle est bridé le cadre à ferrer, ainsi qu'un bras qui surplombe ladite table et qui est monté mobile parallèlement au plan de ladite table, ledit bras transportant une tête de ferrage apte à prélever une ferrure dans un magasin jouxtant la table puis à la positionner et à la fixer sur ledit cadre, par exemple par vissage.

Si de telles machines de l'art antérieur donnent généralement satisfaction, notamment en termes de précision et de reproductibilité, elles présentent toutefois des inconvénients non négligeables.

En effet, les machines de ferrage automatisées connues sont généralement dédiées à la pose d'un type unique de ferrure particulière.

C'est pourquoi il est nécessaire, pour réaliser le ferrage complet d'un même cadre de menuiserie comportant divers types de ferrures, par exemple un cadre supportant à la fois des paumelles et des gâches, de réaliser une ligne de production intégrant en série plusieurs machines de ferrage successives dédiées chacune à la pose de l'un desdits types de ferrures.

De plus, le type de ferrure dépendant de la nature du cadre, il est nécessaire de distinguer les machines de ferrage destinées aux ouvrants et celles destinées aux dormants.

Ainsi, il est fréquent de rencontrer une ligne spécifiquement dédiée aux dormants, comprenant par exemple une ficheuse, une platineuse et une perceuse, ladite ligne cohabitant avec une seconde ligne distincte spécialement dédiée aux ouvrants, cette dernière comportant par exemple un poste de pose de renvoi d'angle, un poste de pose de crémone, un poste de vissage de crémone, etc.

On comprend donc aisément que le fabricant de menuiseries désireux d'élargir sa gamme de produits se voit contraint de multiplier les machines de ferrage.

L'acquisition ou l'évolution d'un outil industriel de production approprié exige par conséquent des investissements lourds qui ne peuvent être rentabilisés que par une fabrication massive, le fabricant restant ainsi durablement captif d'une gamme de produits normalisés.

Par ailleurs, outre le fait qu'elles présentent un certain manque de souplesse et d'évolutivité, les machines de ferrage de l'art antérieur possèdent généralement une structure complexe et volumineuse qui allie mécanique de préhension et d'entraînement, électronique de commande et circuits de distribution d'énergie, ce qui tend à les rendre encombrantes, à compliquer leur maintenance, et, partant, à augmenter leur coût de fonctionnement.

Le document DE 199 22 227 A1 décrit un dispositif de ferrage pourvu d'un bras robotisé adaptable à une tâche de préparation (perçage) ou de montage (vissage).

### EXPOSE DE L'INVENTION

Les objets assignés à la présente invention visent par conséquent à porter remède aux inconvénients énumérés précédemment et à proposer un nouveau dispositif de ferrage de menuiseries qui soit polyvalent et évolutif.

Un autre objet assigné à l'invention vise à proposer un nouveau dispositif de ferrage qui soit de conception particulièrement simple et compacte.

Un autre objet assigné à l'invention vise à proposer un nouveau dispositif de ferrage qui soit peu onéreux à l'acquisition comme à l'usage.

Un autre objet assigné à la présente invention vise à proposer un nouveau dispositif de ferrage dont le fonctionnement soit particulièrement précis, fiable et reproductible.

Les objets assignés à la présente invention visent également à proposer un nouveau dispositif de ferrage autorisant une pose rapide et simple de ferrures sur un cadre de menuiserie.

Les objets assignés à la présente invention visent en outre à proposer un nouveau dispositif de ferrage qui nécessite un minimum de surveillance et d'intervention de l'opérateur.

Les objets assignés à l'invention visent en outre à proposer un nouvel embout de ferrage de menuiserie qui puisse conférer à un dispositif de ferrage une grande polyvalence et une bonne reproductibilité.

Les objets assignés à la présente invention visent également à proposer un nouveau procédé de ferrage de menuiserie qui soit polyvalent et évolutif. Les objets assignés à la présente invention visent ensuite à proposer un nouveau procédé de ferrage de menuiserie dont la mise en oeuvre soit simple, rapide et fiable.

Les objets assignés à l'invention visent enfin à proposer un programme informatique spécifiquement adapté au ferrage de menuiseries qui soit évolutif et optimise tant les performances que la polyvalence du dispositif de ferrage qu'il pilote.

Les objets assignés l'invention sont atteints à l'aide d'un dispositif de ferrage de menuiseries selon la revendication 1.

Les objets assignés à l'invention sont également atteints à l'aide d'un procédé de ferrage de menuiseries selon la revendication 12.

Les objets assignés à l'invention sont enfin atteints à l'aide d'un support pouvant être lu par un ordinateur selon la revendication 13.

Des modes de réalisation préférés du procédé sont décrits dans les revendications dépendantes.

### DESCRIPTIF SOMMAIRE DES DESSINS

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue d'ensemble en perspective, une variante de réalisation d'un dispositif de ferrage de menuiseries conforme à l'invention.
- La figure 2 illustre, selon une vue en perspective, une partie du dispositif de ferrage de la figure 1.
- Les figures 3A et 3B illustrent, selon une vue en perspective, le principe de préhension d'une ferrure par un embout.
- Les figures 4A à 4E illustrent, selon un diagramme schématique, la mise en oeuvre d'un procédé de ferrage de menuiserie conforme à l'invention.
- La figure 5 illustre, selon une vue en perspective schématique, une partie d'un dispositif de ferrage de menuiseries conforme à l'invention.

### MEILLEURE MANIERE DE REALISER L'INVENTION

La présente invention se rapporte à un dispositif 1 de ferrage de menuiseries destiné à la pose de ferrures 2 sur des cadres 3 d'éléments de menuiseries.

Par « *éléments de menuiseries* », on désigne des dormants ou des ouvrants de portes, de fenêtres, de trappes, volets (etc.) qui comportent généralement une ou plusieurs pièces d'armature constituant un cadre 3 sensiblement rigide qui peut notamment servir de support à un panneau plein ou à un élément vitré.

Fréquemment, de tels cadres 3 sont réalisé par l'assemblage de profilés, par exemple en bois, en plastique de type PVC, en métal de type aluminium, qui constituent les montants et traverses d'un élément plan ajouré, de préférence de forme rectangulaire.

Bien que le dispositif 1 soit préférentiellement conçu pour le ferrage d'éléments de menuiseries dédiés au secteur du bâtiment et destinés à être intégrés dans un ouvrage immobilier, et plus précisément posés contre la maçonnerie, il est toutefois envisageable que le dispositif et le procédé conformes à l'invention soient adaptés au ferrage d'éléments de menuiseries destinés à du mobilier, tels que, par exemple, des éléments d'armoires ou de placards.

Par « *ferrure* », on désigne toute pièce mécanique, de préférence métallique, employée en menuiserie en vue de permettre notamment la fixation ou le renfort d'un cadre, l'assemblage et l'articulation d'un ouvrant par rapport à un dormant, ou encore le contrôle des opérations de fermeture et d'ouverture, par exemple le verrouillage/déverrouillage, le guidage et la manoeuvre dudit ouvrant par rapport audit dormant.

A titre d'exemples non limitatifs de ferrures 2, on peut notamment citer les crémones, paumelles, gâches, fiches, paliers, renvois d'angle, compas, housettes, pivots d'oscillo-battant, cales de jeu et de transport, etc.

Selon l'invention, le dispositif de ferrage 1 comprend un support de cadre 4 agencé pour maintenir le cadre 3 à ferrer, ainsi qu'un bras de positionnement 5 pourvu d'un moyen de préhension 6 apte à saisir une ferrure 2 en vue de sa pose sur ledit cadre 3.

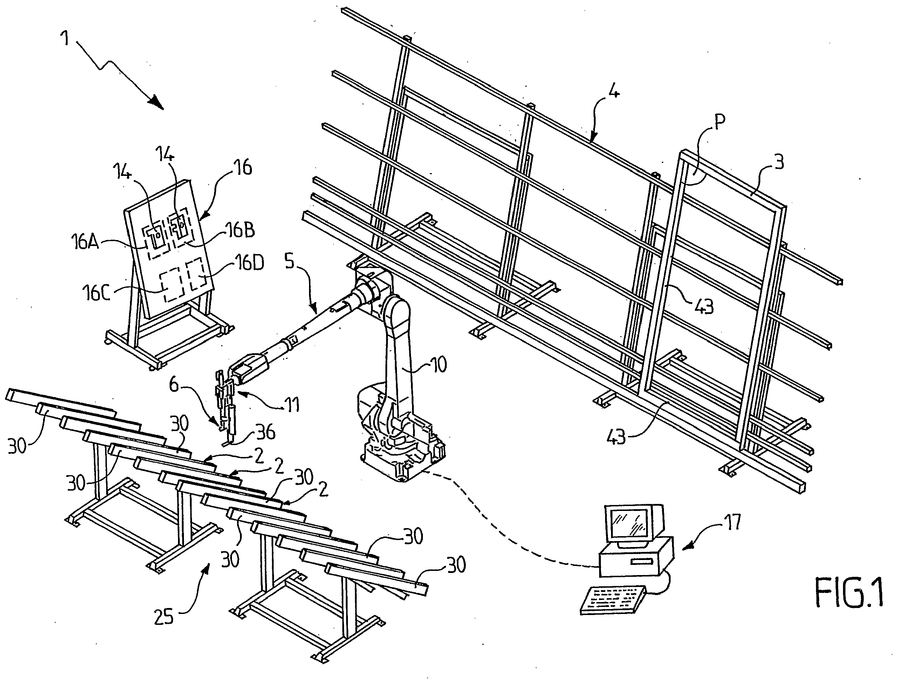

Le support de cadre 4 peut notamment se présenter sous la forme d'une structure mécano-soudée formant une sorte de chevalet sur lequel le cadre 3 à ferrer repose en position relevée, soutenu par une cornière, de manière à faire face au bras de positionnement 5, tel que cela est illustré sur la figure 1.

Bien entendu, il est tout à fait envisageable que le support de cadre 4 s'étende sensiblement à l'horizontale ou selon une inclinaison quelconque comprise entre l'horizontale et la verticale sans sortir du cadre de l'invention. Selon une variante de réalisation préférentielle, ledit support comporte à cet effet une table basculante d'inclinaison réglable (éventuellement motorisée).

Par ailleurs, le support de cadre 4 peut être pourvu ou non de moyens de bridage aptes à bloquer le cadre à ferrer 3 pendant les opérations de ferrage. Bien entendu, il est envisageable que le cadre à ferrer 3 soit simplement posé sur ledit support 4 et maintenu sous l'effet de son propre poids.

En outre, le support de cadre 4 peut être associé fonctionnellement à un convoyeur conçu pour alimenter ledit support en cadres à ferrer et/ou retirer le cadre après l'opération de ferrage. Un tel convoyeur peut notamment être réalisé à l'aide de vérins sans tiges.

Le bras de positionnement 5 est conçu pour positionner le moyen de préhension 6 par rapport au cadre 3 de telle sorte que la ferrure 2 tenue par ledit moyen de préhension 6 se présente en regard d'un emplacement prédéterminé dudit cadre 3 qui est prévu pour recevoir ladite ferrure 2.

En d'autres termes, le bras de positionnement 5 est mobile par rapport au cadre 3, et plus généralement par rapport au support 4, et dispose d'un débattement suffisant pour pouvoir accéder aux différentes parties du cadre 3 qui sont concernées par le ferrage.

Tel que cela est illustré notamment sur la figure 1, le bras de positionnement 5 est articulé, et formé par un bras manipulateur robotisé 10 poly-articulé, tel qu'un bras robotisé à six axes.

Avantageusement, un tel agencement offre une large possibilité de positionnement du moyen de préhension 6 par rapport au cadre 3, dans la mesure où il permet au dispositif 1 d'opérer dans une fenêtre de travail tridimensionnelle, avec un rayon d'action étendu et en offrant des conditions d'approche très variées du moyen de préhension 6 vis-à-vis du cadre 3.

En effet, un tel bras robotisé est à même de se frayer un passage pour accéder à la quasi-totalité des surfaces libres du cadre 3, quitte à contourner d'éventuels éléments du cadre formant des obstacles à la progression directe du moyen de préhension 6.

En particulier le dispositif 1 conforme à l'invention est avantageusement capable de poser des ferrures 2 aussi bien sur la face que sur l'un des chants dudit cadre 3.

De surcroît, un tel bras de positionnement 5 pouvant aborder le cadre 3 aussi bien par l'intérieur que par l'extérieur, le dispositif 1 est avantageusement apte à ferrer aussi bien des dormants que des ouvrants.

Le dispositif 1 possède donc une grande liberté de mouvement et une importante faculté d'adaptation qui le rendent apte à répondre aux besoins de ferrage de cadres de tailles et de formes très diverses.

Selon une caractéristique importante de l'invention, le moyen de préhension 6 est conçu pour évoluer en plusieurs configurations de préhension, chaque configuration de préhension étant spécifiquement adaptée à la préhension d'un type particulier de ferrure 2 qui diffère par sa forme et/ou ses dimensions du ou des autres types de ferrures 2 auxquelles correspondent, respectivement, la ou les autres configurations de préhension.

En d'autres termes, le moyen de préhension 6 est configurable et prévu pour s'adapter à la saisie d'au moins deux types de ferrures différents, de telle sorte que le dispositif 1 de ferrage est apte à procéder à la pose d'au moins deux modèles de ferrures différents, et plus généralement d'une pluralité de modèles de ferrures distincts dimensionnellement et fonctionnellement les uns des autres, à l'aide du même bras de positionnement 5, de façon centralisée, sans qu'il soit nécessaire de recourir à une chaîne de production intégrant plusieurs dispositifs de ferrage, et plus particulièrement plusieurs bras de positionnement.

Le dispositif 1 conforme à l'invention est donc particulièrement polyvalent, en quelque sorte « *multitâche* », puisqu'il peut s'adapter d'une part au ferrage de cadre de formes et de tailles variées, et d'autre part à la saisie, à la manipulation et à la pose de ferrures de modèles très divers (en particulier sur un même cadre), ce qui lui confère une grande souplesse d'utilisation vis-à-vis des impératifs de la production.

De préférence, le moyen de préhension 6 comporte à cet effet une embase 12 qui est solidaire, sur le plan cinématique, du bras de positionnement 5, ainsi qu'un embout de ferrage 14. qui est fixé sur ladite embase 12 à l'aide d'un moyen d'accouplement 15. Ledit embout de ferrage 14 est adapté à la préhension d'un type particulier de ferrure 2, de telle sorte que le choix dudit embout de ferrage 14 détermine la configuration de préhension.

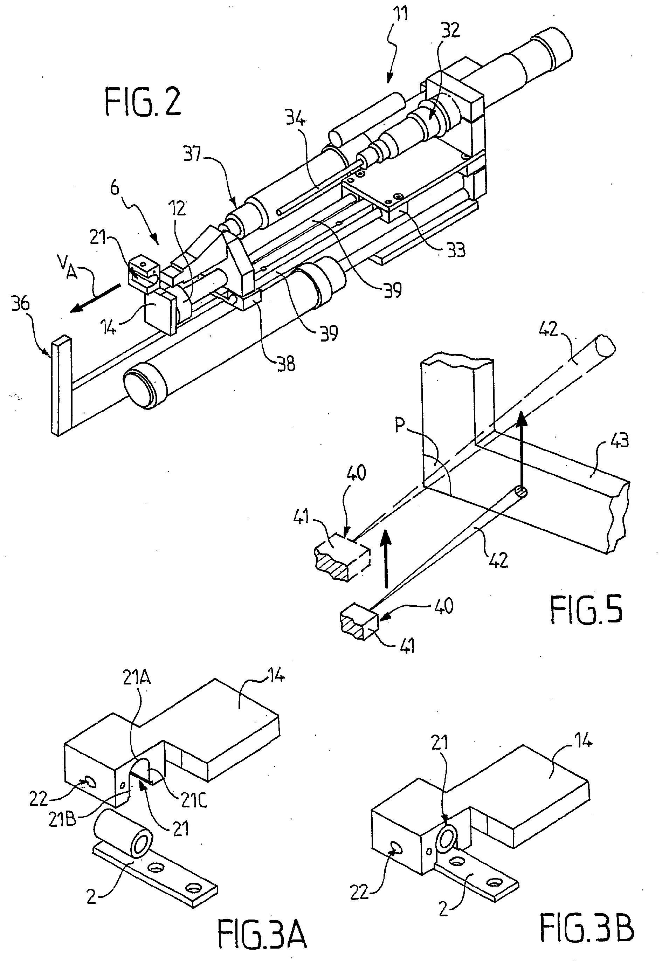

De préférence, tel que cela est représenté sur les figures 1 et 2, l'embase 12 est intégrée à une tête 11 du bras robotisé 10, qui se trouve fixée au niveau du tronçon d'articulation terminal (ou « *poignet* ») dudit bras robotisé 10, de telle sorte que l'embout de ferrage 14 se présente sensiblement à l'extrémité libre du bras de positionnement 5.

Il est envisageable que la tête 11 du bras robotisé 10 soit pourvue d'un embout de ferrage 14 constitué d'une pince « *universelle* » comportant plusieurs mors dont la distance de séparation peut être ajustée en fonction de la ferrure à saisir. En d'autres termes, il est envisageable que le « *choix* » de l'embout se résume à un choix de conformation dudit embout, en l'occurrence de ladite pince, parmi une pluralité de conformations que peut adopter ledit embout ; c'est-à-dire que l'on utilise pour différentes opérations de ferrage impliquant la préhension de différents modèles de ferrure un embout unique qui est remanié à chaque changement de configuration de préhension de sorte à correspondre à la nouvelle ferrure à poser.

Toutefois, chaque embout de ferrage 14 est spécifiquement adapté à la préhension d'un type particulier de ferrure, c'est-à-dire présente une conformation prédéterminée et sensiblement invariante, spécifiquement et exclusivement adaptée à la préhension d'un unique type de ferrure 2 (éventuellement d'une unique gamme de ferrures présentant une communauté suffisante de formes et de dimensions). Ainsi, le choix de la configuration de préhension se fait par la sélection de l'embout qui est approprié à la ferrure considérée, et le passage d'une configuration de préhension à l'autre s'effectue par remplacement d'un embout de ferrage 14 par un autre.

De préférence, le moyen d'accouplement 15 est donc réversible et conçu pour adopter alternativement une configuration de fixation, dans laquelle il assujettit l'embout de ferrage 14 à l'embase 12, et une configuration de largage, dans laquelle il autorise la séparation dudit embout de ferrage 14 de ladite embase 12 en vue de la dépose et du remplacement dudit embout de ferrage 14, lequel est par conséquent amovible.

Le dispositif possède donc une structure modulaire qui permet d'associer alternativement à une même embase 12 une pluralité d'embouts de ferrage 14 interchangeables, et ainsi de disposer d'autant de configurations de préhension qu'il existe d'embouts 14 disponibles, le passage d'une configuration de préhension à une autre configuration de préhension s'effectuant par le seul changement de l'embout de ferrage 14. Bien qu'il soit envisageable de doter le bras de positionnement 5, et plus particulièrement la tête 11, d'un réservoir embarqué d'embouts de ferrage 14, tel qu'un barillet rotatif apte à placer sur commande l'un ou l'autre des embouts qu'il contient en vis-à-vis de l'embase 12, le bras de positionnement 5, et plus précisément le moyen de préhension 6, seront de préférence agencés de manière à n'embarquer simultanément qu'un seul et unique embout de ferrage 14, le changement de configuration de préhension s'effectuant par échange de l'embout de ferrage embarqué, c'est-à-dire par dépose préalable d'un premier embout de ferrage déjà en place de manière à libérer l'embase 12, puis par montage d'un autre embout de ferrage 14 sur ladite embase 12.

A cet effet, le dispositif comporte de préférence un magasin d'embouts de ferrage 16 qui contient une pluralité d'embouts de ferrage 14 qui correspondent aux différents types de ferrures à poser, ledit magasin d'embouts 16 étant agencé pour permettre la prise et la dépose alternatives desdits embouts de ferrage 14 par le bras de positionnement 5.

Avantageusement, le magasin d'embouts de ferrage 16 constitue donc une station d'échange et de stockage des embouts qui détermine le nombre de configurations de préhension disponibles pour le dispositif 1.

Bien entendu, les embouts de ferrage 14 stockés dans le magasin 16 sont agencés de manière à être accessibles au bras de positionnement 5, et plus particulièrement à la tête 11 du bras robotisé 10.

Tel que cela est illustré sur la figure 1, le magasin peut donc se présenter sous forme d'un présentoir, en particulier d'un présentoir fixe indépendant de la tête 11 et du bras de positionnement 5, dont les divers emplacements 16A, 16B, 16C, 16D sont repérés et identifiables par ledit bras de positionnement 5 (et par exemple mémorisés dans le circuit d'asservissement des mouvements dudit bras).

De façon particulièrement avantageuse, la sélection et l'usage unitaire de l'embout de ferrage 14 permettent de limiter le poids et l'encombrement total de la tête 11, et par conséquent de gagner en vitesse, en précision, et en consommation d'énergie lors de l'opération de ferrage.

Ainsi, en pratique, l'inventeur a constaté que la masse totale de la tête 11 du dispositif peut être inférieure à 10 kg, voire inférieure ou égale à 7,5 kg.

Bien entendu, le moyen d'accouplement 15 est choisi de sorte à être peu encombrant et simple à mettre en oeuvre. Selon une variante de réalisation préférentielle, il comprend un électro-aimant agencé pour, lorsqu'il est activé, c'est-à-dire alimenté électriquement, maintenir l'embout de ferrage 14 plaqué contre l'embase 12. De préférence, ledit électro-aimant est logé à l'intérieur de ladite embase 12.

De façon particulièrement préférentielle, le dispositif 1 possède un moyen de contrôle 17, de préférence programmable, tel qu'un automate programmable, une carte électronique ou un ordinateur, apte à piloter automatiquement l'évolution du moyen de préhension 6 d'une configuration de préhension à l'autre.

Par « *automatiquement* », on indique que l'opération de reconfiguration du moyen de préhension 6, et plus particulièrement d'échange de l'embout de ferrage 14, s'effectue sans intervention mécanique de l'opérateur sur ledit moyen de préhension 6, c'est-à-dire que le dispositif est apte à réaliser lui-même cet échange de manière autonome, sans assistance humaine extérieure (le cas échéant, dès lors que consigne lui a été donnée de procéder à un tel échange).

Bien entendu, ledit moyen de contrôle 17 peut également piloter les mouvements du bras robotisé 10, et contrôler le passage du moyen d'accouplement 15 de sa configuration de fixation vers sa configuration de largage et réciproquement, par exemple en régulant l'alimentation électrique de l'électroaimant.

Le recours à l'informatisation permet alors avantageusement de réaliser aussi bien la pose de ferrures 2 que les changements d'outils (d'embouts de ferrage 14) de manière très rapide, ce qui permet au dispositif 1 d'être particulièrement performant et compétitif, même pour une production en série.

En outre, le moyen d'accouplement 15 comporte préférentiellement un organe de détrompage 20 qui permet d'assurer le positionnement déterministe et reproductible de l'embout de ferrage 14 par rapport à l'embase 12.

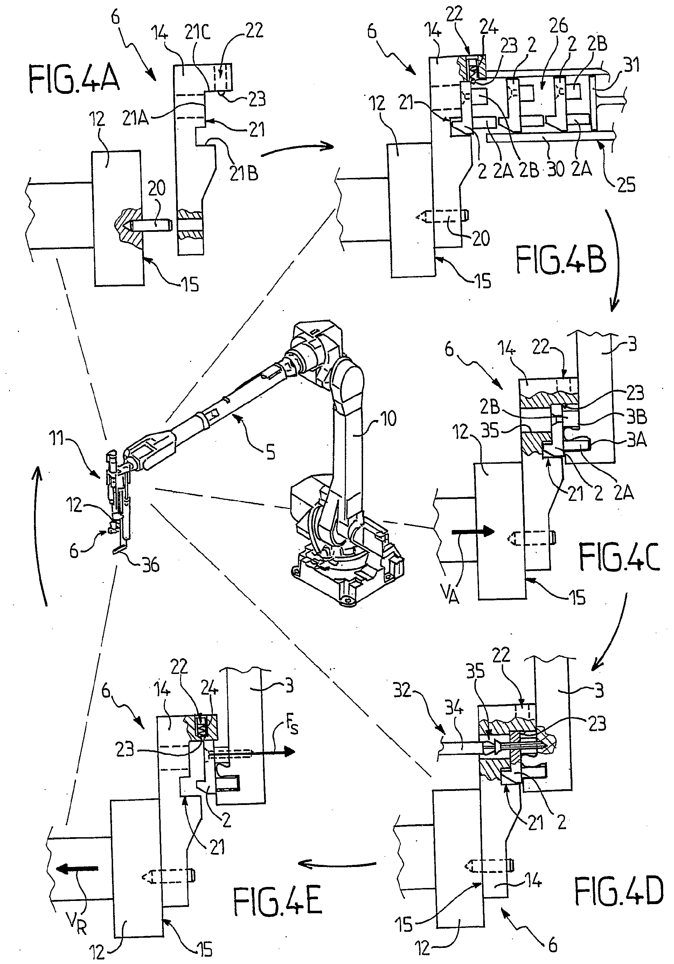

Tel que cela est illustré sur la figure 4A, l'organe de détrompage 20 peut notamment comprendre un système composé d'un ou plusieurs tenons de centrage faisant saillie sur la face de l'embase 12 destinée à accueillir l'embout de ferrage 14, lesdits tenons étant destinés à coopérer avec des trous conjugués percés dans ledit embout de ferrage 14.

Ainsi, il est possible de garantir une orientation convenable et reproductible de tout embout de ferrage 14 par rapport au bras de positionnement 5, ce qui facilite la définition et la conservation du repère spatial de travail du dispositif 1 (notamment pour éviter les dérives après une Prise d'Origine Machine).

De préférence, tel que cela est illustré sur les figures 2, 3A, 3B et 4A à 4E, l'embout de ferrage 14 présente une empreinte 21 de forme sensiblement conjuguée à celle du type de ferrure 2 à poser.

Ainsi, lors de la préhension, la ferrure 2 vient au moins en partie se loger dans ladite empreinte 21. Bien entendu, ladite empreinte 21 est avantageusement agencée de telle sorte qu'elle présente une ou plusieurs surfaces d'appui 21A, 21B, 21C qui d'une part garantissent une bonne préhension de la, ferrure 2 saisie en limitant, voire en empêchant les mouvements parasites notamment latéraux de ladite ferrure lorsque celle-ci est logée dans l'empreinte 21, et d'autre part font office de butées de positionnement garantissant une préhension reproductible des ferrures successives d'un même type. En particulier, le profil de l'empreinte 21 peut, aux angles de dépouille près, épouser sensiblement le contour externe de la ferrure 2.

En outre, l'embout de ferrage 14 est de préférence pourvu d'un organe de verrouillage 22, par exemple de type clip, qui est agencé pour engager la ferrure 2 lors de la préhension de cette dernière de manière à s'opposer à la séparation de ladite ferrure 2 et dudit embout de ferrage 14. On évite ainsi tout risque de chute ou de déplacement accidentel de la ferrure par rapport au moyen de préhension 6 lorsque ladite ferrure est transportée jusqu'au cadre 3 par le bras de positionnement 5, et en particulier lorsque la ferrure 2 est plaquée contre la cadre 3, voire insérée à force dans ce dernier par ledit bras de positionnement 5, tel que cela sera décrit ci-après.

De surcroît, ledit organe de verrouillage 22 est de préférence réversible sous la contrainte, de telle sorte qu'il puisse libérer la ferrure 2 lorsqu'un effort de séparation F_{S} supérieur à une valeur prédéterminée F_{S0} est exercé sur ladite ferrure 2.

Tel que cela est illustré sur la figure 4E, l'effort de séparation F_{S} peut consister en un effort de traction orienté vers l'extérieur de l'empreinte 21 dans le sens contraire à celui de l'admission de la ferrure 2 au sein de ladite empreinte 21.

Ainsi, l'organe de verrouillage 22 évite l'extraction accidentelle de la ferrure 2 hors du moyen de préhension 6 lors de la manipulation et de la pose de ladite ferrure, mais autorise par contre l'extraction forcée de ladite ferrure 2 hors de l'embout de ferrage 14 après que ladite ferrure a été posée sur le cadre 3.

Un tel emmanchement réversible permet avantageusement, tel que cela sera détaillé ci-après, un transfert facile de la ferrure 2 du moyen de préhension 6 au cadre 3, par un simple dimensionnement convenable de la force de rétention de l'organe de verrouillage 22.

Tel que cela est illustré sur les figures 4A à 4E, l'organe de verrouillage 22 comporte de préférence une clenche 23 qui est précontrainte par un organe élastique 24, ladite clenche 23 faisant saillie sur la surface de la paroi de l'empreinte 21 de manière à pouvoir coopérer avec la surface de la ferrure 2 lorsque cette dernière est insérée dans ladite empreinte 21.

L'organe de verrouillage 22 peut avantageusement se présenter sous la forme d'un poussoir à bille vissé dans le corps de l'embout 14 et dont la pointe arrondie fait saillie sur une paroi sensiblement parallèle à la direction d'insertion de la ferrure 2 dans l'empreinte 21, de telle sorte que l'extrémité portant la bille qui forme la clenche 23 puisse se rétracter et s'escamoter lors de l'insertion ou de l'extraction à force de la ferrure 2. Il est remarquable que le profil sphérique de la clenche 23 est particulièrement simple à réaliser et favorise la réversibilité de l'encliquetage.

Ainsi, l'embout de ferrage 14 constitue une véritable interface entre le bras de positionnement et la ferrure 2, ladite interface étant adaptée d'un côté à un montage réversible, stable et reproductible sur la tête 11, et de l'autre côté à une préhension précise, rapide, réversible et sûre de la ferrure 2.

Il est en outre remarquable que, selon un mode particulier de fonctionnement particulièrement simplifié, il est possible d'accoler directement la ferrure 2 sur l'embase 12 et de la maintenir en utilisant l'électroaimant du moyen d'accouplement 15, sans utiliser aucun embout de ferrage 14. Bien entendu, il est pour cela nécessaire que la ferrure à poser présente une surface conjuguée à celle de l'embase 12 (plane, de préférence) et que ladite ferrure soit sensible à l'aimantation (cas des ferrures en acier).

De surcroît, la préhension de la ferrure 2 par insertion dans une empreinte 21 et/ou placage contre une surface d'appui de forme sensiblement conjuguée à ladite ferrure permet très avantageusement au dispositif 1 de s'adapter facilement à la manipulation et à la pose de ferrures de tous types, quels qu'en soient la marque et le modèle, et plus particulièrement de ferrures présentant des formes biseautées qui les rendent insaisissables par une pince ordinaire. En outre, ce type de préhension est particulièrement respectueux de la ferrure, et notamment de son état de surface.

Par ailleurs, tel que cela est illustré sur les figures 1 et 4B, le dispositif 1 est avantageusement pourvu d'un magasin de ferrures 25 qui dispose d'au moins une aire de stockage 26 contenant un ou plusieurs exemplaires d'un ou plusieurs types de ferrures 2 déterminés, ledit magasin de ferrures 25 étant agencé pour être accessible au moyen de préhension 6.

Bien qu'il soit envisageable que le magasin de ferrures 25 soit embarqué sur le bras de positionnement 5, il est préférable que celui-ci soit distinct dudit bras et constitue une station d'alimentation fixe intégrée au poste de ferrage. En outre, bien qu'il soit envisageable d'employer des embouts de ferrage 14 agencés pour collecter et transporter collectivement plusieurs ferrures 2 ' simultanément, voire pour autoriser une pose groupée desdites ferrures 2 sur le cadre 3, le dispositif 1 collecte et manipule de préférence les ferrures 2 individuellement, une par une, réalisant ainsi la pose de chaque ferrure séparément.

Tel que cela est illustré sur la figure 1, l'aire de stockage 26 peut être formée par une pluralité de goulottes 30 formant des chemises dont les dimensions intérieures sont choisies de manière à pouvoir accueillir une pile de ferrures 2 d'un type déterminé, ladite pile étant libre de progresser en translation le long de ladite goulotte 30 de sorte que la ferrure située à l'extrémité de la pile se présente, et de préférence émerge, en sortie de goulotte.

Il est remarquable qu'en lieu et place (voire en sus) d'un présentoir collectif centralisé, le magasin d'embouts de ferrage 16 peut comporter une pluralité d'emplacements de stockage d'outil individuels déportés, sous forme de porte-embouts associés aux goulottes 30. Ainsi, chaque goulotte 30 dédiée à un type particulier de ferrure 2 est pourvue de son propre emplacement de stockage d'outil destiné à accueillir l'embout de ferrage 14 spécifiquement compatible avec le type de ferrures stockées dans ladite goulotte 30, lorsque ledit embout de ferrage est déposé. En d'autres termes, on peut diviser géographiquement le magasin d'embouts 16 et stocker individuellement chaque embout de ferrage 14 séparément des autres embouts en l'associant au réservoir qui contient les ferrures qui lui correspondent, à proximité immédiate de son site d'utilisation.

Avantageusement, un tel agencement confère tout d'abord une excellente évolutivité au dispositif 1 dans la mesure où la seule modification matérielle à apporter au dispositif de ferrage 1 pour accroître la panoplie des modèles de ferrures que ledit dispositif 1 est à même de poser consiste alors simplement à ajouter à côté des goulottes 30 déjà en place un nouvel ensemble goulotte/porte-embout chargé de son embout de ferrage 14.

En outre, on réduit ainsi le risque de confusion ou d'interversion lors de l'affectation des embouts de ferrage sur leurs emplacements de stockage respectifs, l'association à chaque goulotte 30 d'un embout de ferrage 14 unique et séparé apparaissant clairement à l'opérateur chargé de la préparation ou de la maintenance du poste de ferrage.

Selon une variante de réalisation préférentielle, le magasin de ferrures 25 dispose d'un moyen de chargement 31 apte à transférer une ferrure 2 depuis l'aire de stockage 26 jusqu'au moyen de préhension 6.

Plus précisément, tel que cela est illustré sur la figure 4B, le moyen de chargement 31 pourra comporter un poussoir, de type vérin, apte à convoyer une ferrure 2 issue de l'aire de stockage 26 et à enfoncer ladite ferrure 2 dans l'empreinte 21 de l'embout de ferrage 14 jusqu'à l'engagement de la clenche 23, lorsque le moyen de préhension 6 se présente à l'embouchure de la goulotte 30.

Selon une variante d'agencement du dispositif 1, la position de l'embout de ferrage 14 en vis-à-vis du moyen de chargement 31, à l'embouchure de la goulotte 30, peut coïncider avec la position occupée par ledit embout de ferrage 14 lorsqu'il est déposé de l'embase 12 et stocké sur le porte-embout, en attente d'être solidarisé au bras 5. En d'autres termes, il est envisageable que le porte-embout associé à la goulotte 30 soit conçu pour permettre tout d'abord le chargement d'une ferrure 2 dans l'embout de ferrage 14 alors que ce dernier est détaché de l'embase 12, puis pour autoriser ensuite l'accouplement de l'ensemble embout/ferrure à l'embase 12 et son enlèvement par le bras de positionnement 5. Par ailleurs, le dispositif 1 comprend de préférence un moyen de montage 32, tel qu'une visseuse, ledit moyen de montage 32 étant embarqué sur le bras de positionnement 5, et plus précisément sur la tête 11, et agencé de sorte à permettre la fixation de la ferrure 2 au cadre 3 lorsque ladite ferrure 2 se trouve positionnée sur ledit cadre par le moyen de préhension 6.

En particulier, le moyen de montage 32 peut se présenter sous la forme d'une visseuse électrique ou pneumatique dont le corps est fixé sur un chariot 33 monté mobile par rapport au moyen de préhension 6, de telle sorte qu'il soit possible d'approcher ou éloigner de la ferrure 2 la lame rotative 34 de ladite visseuse dont le format est adapté à la manoeuvre de la ou des vis de fixation de la ferrure 2 sur le cadre 3.

Avantageusement, pour conférer à la tête 11 une structure compacte, le moyen de montage 32, et plus particulièrement la lame rotative 34, est situé sensiblement dans l'alignement de la ferrure 2 et du moyen de préhension 6. A cet effet, l'embout de ferrage 14 présente alors au moins une lumière 35 qui forme un passage d'outil agencé pour permettre au moyen de montage 32 d'accéder à la ferrure et/ou au cadre, tel que cela est illustré sur la figure 4D.

Ainsi, on peut non seulement embarquer simultanément sur la tête 11 un moyen de montage 32 et un moyen de préhension 6 agencés pour coopérer lors de la pose de la ferrure 2, mais également associer alternativement différents embouts de ferrage 14 à un même moyen de montage 32, c'est-à-dire disposer d'un moyen de montage 32 commun à plusieurs types de ferrures 2. Avantageusement, on peut donc définir la configuration fonctionnelle de la tête 11 par une reconfiguration partielle de celle-ci, simplement en choisissant l'embout 14, sans avoir à changer de moyen de montage 32 ni *a fortiori* avoir à déposer et remplacer ladite tête 11 dans son ensemble.

En outre, tel que cela est illustré sur les figures 1 et 2, la tête 11 peut également comporter un moyen de retenue 36 destiné à permettre l'arrimage de ladite tête 11 sur le cadre 3, afin d'éviter tout recul intempestif du bras robotisé 10 par réaction à un effort d'appui axial exercé par ledit bras robotisé sur le cadre 3 lors de la mise en oeuvre du moyen de montage 32 ou lors de la pose de la ferrure par le moyen de préhension 6.

En particulier, le moyen de retenue 36 sera apte à compenser les effets de la poussée qui est appliquée à la lame rotative 34 pour permettre la pénétration de la vis de fixation de la ferrure 2 dans le matériau du cadre 3. Avantageusement, ledit moyen de retenue 36 peut être formé par une équerre permettant le crochetage de la partie du cadre 3 opposée à la surface de posé de la ferrure 2 et de pénétration de la vis de fixation.

Par ailleurs, la tête 11 peut être pourvue d'un moyen de déplacement différentiel 37 autorisant le déplacement de l'embase 12 par rapport à ladite tête 11, et plus précisément par rapport à l'équerre de retenue 36. Le moyen de déplacement différentiel 37 peut notamment comprendre un chariot 38 guidé en translation et mû par vérin. De façon particulièrement préférentielle, tel que cela est illustré sur la figure 2, le chariot 33 du moyen de montage et le chariot 38 du moyen de déplacement différentiel partageront le même rail de guidage 39 afin que la tête 11 gagne en compacité.

Ainsi, l'embase 12 peut être animée d'un mouvement final d'approche particulièrement fin et précis, notamment lorsque la ferrure 2 doit être amenée au contact du cadre 3 (mouvement d'avance symbolisé par la flèche V_{A}) après que le bras robotisé 10 a positionné ladite tête 11 en vis-à-vis, mais légèrement en retrait, dudit cadre 3.

Bien entendu, le dispositif peut également comprendre un moyen de préparation, tel qu'une perceuse, également embarqué sur le bras de positionnement 5 de préférence au niveau de la tête 11, ledit moyen de préparation étant apte à préparer, de préférence par usinage, un emplacement particulier du cadre 3 en vue de la réception et de la fixation de la ferrure 2.

Toutefois, il est parfaitement envisageable que la préparation du cadre à ferrer 3 soit réalisée sur un poste de préparation séparé, éventuellement de conception sensiblement analogue à celle du poste de ferrage, ledit poste de préparation disposant également d'un bras robotisé à six axes, mais différant du dispositif de ferrage par le fait que sa tête comprend non pas un moyen de préhension mais un moyen de préparation.

Bien entendu, le dispositif de ferrage 1 conforme à l'invention est susceptible de faire l'objet de variations de conception, et notamment peut parfaitement intégrer une pluralité de bras de positionnement 5 pourvus chacun d'un moyen de préhension 6 et/ou d'un moyen de préparation et/ou d'un moyen de montage.

En outre, on comprendra aisément que l'on peut faire évoluer le nombre de types de ferrures différents pouvant être posé par un même dispositif 1 en accroissant la capacité du magasin de ferrures 25, en disposant le ou les embouts de ferrage 14 correspondants dans le magasin d'embouts 16 et en programmant la ou les séquences de manipulations correspondantes au niveau du moyen de contrôle 17.

Par ailleurs, selon une variante de réalisation particulièrement avantageuse qui peut constituer une invention en tant que telle (non revendiquée), indépendamment de la mise en oeuvre d'un moyen de préhension 6 configurable, le dispositif de ferrage de menuiseries pourra être pourvu d'un moyen de repérage spatial relatif 40 conçu pour identifier un élément particulier sur le cadre 3 à ferrer, par exemple une feuillure, et considérer ledit élément particulier comme point d'origine d'un repère relatif associé audit cadre 3 afin d'asservir le déplacement du bras de positionnement 5 dans ledit repère relatif.

Plus précisément, le moyen de repérage spatial relatif 40 comprendra un organe de détection embarqué sur le bras de positionnement 5, de préférence à proximité immédiate du moyen de préhension 6, et capable de détecter la présence d'un élément particulier dudit cadre 3 lorsque le bras de positionnement 5, respectivement le moyen de préhension 6, passe à proximité de cet élément particulier.

Bien qu'il soit envisageable d'utiliser un organe de détection mécanique de type palpeur, ledit organe de détection comportera de préférence un capteur optique 41, de type capteur laser avec suppression d'arrière-plan, agencé pour balayer le cadre 3 de son faisceau 42 lorsque le bras de positionnement 5 se déplace par rapport audit cadre 3 et pour détecter un changement d'état, tel qu'un front montant, correspondant à la transition marquée par une feuillure 43 du cadre 3.

La figure 5 représente ainsi deux positions successives du capteur optique 41, l'une en trait plein et la suivante en pointillés, considérées respectivement avant et après le franchissement (selon les flèches verticales) de l'arête marquée par la feuillure 43.

Plus précisément, le capteur optique 41 est de préférence embarqué sur la tête 11, son faisceau laser étant pointé dans le prolongement de ladite tête 11 et orienté sensiblement perpendiculairement au plan principal d'extension P du cadre 3, tandis que la tête 11 est entraînée en déplacement par le bras robotisé 10 en vis-à-vis du cadre 3, parallèlement au plan d'extension principal P. Ainsi, le franchissement (ou « *survol* ») d'une feuillure 43, c'est-à-dire d'un chant du cadre correspondant à l'arête d'un montant ou d'une traverse, générera une variation de signal émis par le capteur qui correspondra à la transition entre un champ de réflexion proche et un champ de réflexion lointain du faisceau.

Bien entendu, la gestion du moyen de repérage 40 et notamment la mesure de la distance de déplacement du bras de positionnement 5 par rapport au point d'origine du repère relatif, selon l'un ou l'autre des axes dudit repère, pourra être intégrée au moyen de contrôle 17 et pilotée par un programme informatique idoine.

La mise en oeuvre d'un tel moyen de repérage relatif permet avantageusement de positionner très précisément le moyen de préhension 6 par rapport à chaque cadre 3 et ainsi de reporter avec une excellente précision (de l'ordre du dixième de millimètre) la ferrure 2 sur ledit cadre 3, malgré les variations des conditions de ferrage, d'un cadre 3 à l'autre, dues aux tolérances de fabrication ou de positionnement du cadre 3 sur le support 4.

Par ailleurs, la présente divulgation concerne également un embout de ferrage de menuiseries 14 en tant que tel, ledit embout de ferrage 14 étant destiné à être utilisé en tant que partie interchangeable d'un moyen de préhension 6 de ferrure 2 au sein d'un dispositif de ferrage de menuiseries 1, de telle sorte que ledit moyen de préhension 6 puisse, en fonction du choix dudit embout de ferrage 14, évoluer en plusieurs configurations de préhension, chaque configuration de préhension étant spécifiquement adaptée à la préhension d'un type particulier de ferrure 2 qui diffère par sa forme et/ou ses dimensions du ou des autres types de ferrure auxquelles correspondent la ou les autres configurations de préhension.

Bien entendu, l'embout de ferrage 14 sera susceptible de faire l'objet de toutes les variantes décrites ci-dessus et sera notamment compatible avec sa fixation sur l'embase 12 à l'aide d'un moyen d'accouplement 15 tel que défini ci-dessus.

Un procédé de ferrage de menuiseries conforme à l'invention va maintenant être décrit en référence aux figures 4A à 4E.

Le procédé de ferrage conforme à l'invention est destiné à être mis en oeuvre au sein d'un dispositif de ferrage de menuiseries comprenant un bras de positionnement 5 pourvu d'un moyen de préhension 6 apte à saisir une ferrure 2 en vue de sa pose sur un cadre 3 d'élément de menuiserie.

Bien entendu, la mise en oeuvre dudit procédé est tout particulièrement indiquée au sein d'un dispositif de ferrage 1 tel que décrit précédemment.

Selon une caractéristique importante de l'invention, ledit procédé de ferrage comporte une étape (a) de configuration du moyen de préhension 6 au cours de laquelle on confère audit moyen de préhension 6 une configuration de préhension spécifique choisie parmi une pluralité de configurations de préhension possibles, chacune desdites configurations de préhension étant adaptée à la préhension d'un type particulier de ferrure 2 qui diffère par sa forme et/ou ses dimensions du ou des autres types de ferrures 2 auxquels correspondent, respectivement, la ou les autres configurations de préhension.

Le moyen de préhension 6 comprenant une embase 12 solidaire du bras de positionnement 5, l'étape (a) de configuration du moyen de préhension comporte une sous-étape (a1) de sélection au cours de laquelle on sélectionne, parmi une pluralité d'embouts de ferrage 14 disponibles, un embout de ferrage 14 particulier qui correspond à la ferrure 2 à poser.

Ladite sous-étape (a1) de sélection peut notamment être réalisée à l'aide d'un magasin d'embouts 16 pourvu d'un présentoir dont les emplacements 16A, 16B, 16C, 16D sont repérés dans la mémoire du moyen de contrôle 17 de telle sorte que le bras robotisé 10 puisse aller prélever l'embout de ferrage 14 approprié sur ledit présentoir.

En outre, l'étape (a) de configuration du moyen de préhension comporte de préférence une sous-étape (a2) d'assemblage au cours de laquelle on fixe sur ladite embase 12 l'embout de ferrage 14 sélectionné lors de la sous-étape (a1) à l'aide d'un moyen d'accouplement idoine 15.

Plus particulièrement, en référence à la figure 4A, ladite sous-étape (a2) d'assemblage peut consister à amener la tête 11 à proximité, du magasin d'embouts 16, en vis-à-vis de l'un des emplacements 16A, 16B, 16C, 16D, à rapprocher l'embase 12 de l'embout de ferrage 14 jusqu'à ce que le tenon de détrompage 20 s'engage dans le trou correspondant, puis à activer l'électroaimant de sorte à venir plaquer l'embout 14 contre l'embase 12 et ainsi réaliser une liaison encastrement entre ces deux éléments.

Par ailleurs, l'étape (a) de configuration du moyen de préhension peut comprendre une sous-étape (a0) d'initialisation, préalable à la sous-étape (a1) de sélection, au cours de laquelle on dépose du bras de positionnement 5 un premier embout de ferrage antérieurement fixé à l'embase 12, de sorte à pouvoir remplacer ultérieurement ledit premier embout par un second embout nouvellement sélectionné lors de la sous-étape (a1) de sélection.

Bien entendu, un tel échange d'embouts est de préférence automatisé.

Une fois l'embout de ferrage 14 embarqué sur la tête 11, le procédé de ferrage conforme à l'invention comporte également une étape (b) de collecte de ferrure au cours de laquelle on prélève une ferrure 2 à l'aide du moyen de préhension 6 dans un magasin de ferrures 25 tel que cela est illustré sur la figure 4B.

Plus précisément, le bras robotisé 10 déplace la tête 11 de sorte à positionner l'embout de ferrage 14, et plus particulièrement l'empreinte 21, en regard de la sortie d'une aire de stockage 26 hors de laquelle une ferrure 2 est éjectée sous la poussée d'un vérin de chargement 31. Le déplacement de ladite ferrure 2 est suffisant pour que celle-ci franchisse la clenche 23 de l'organe de verrouillage 22 et vienne s'encliqueter au fond de l'empreinte 21, s'arrimant ainsi au bras de positionnement 5.

Le procédé de ferrage comporte ensuite une étape (c) de pose au cours de laquelle on positionne le moyen de préhension 6 par rapport au cadre 3, à l'aide du bras de positionnement 5, de telle sorte que la ferrure 2 tenue par ledit moyen de préhension 6 se présente en regard d'un emplacement prédéterminé dudit cadre prévu pour recevoir ladite ferrure 2. De préférence, le plat intérieur de l'équerre de retenue 36 vient alors se positionner à l'arrière du cadre 3, en appui sur la face qui se trouve à l'opposé de la face sur laquelle doit être posée la ferrure.

Tel que cela est représenté sur la figure 4C, la ferrure 2 peut en outre être pourvue de pattes saillantes 2A, 2B destinées à venir se ficher dans des logements 3A, 3B, tels que des rainures, ménagés dans le cadre 3. La ferrure est dans ce cas transportée du magasin de ferrures 25 jusqu'au cadre, en vis-à-vis desdits logements 3A, 3B, puis approchée du cadre 3, selon un mouvement d'avance V_{A}, de manière à ce que les pattes 2A, 2B pénètrent dans leur logement 3A, 3B respectif. Bien entendu, l'embout de ferrage 14 est agencé pour garantir le maintien de la ferrure 2 lors de l'enfoncement des pattes 2A, 2B dans leurs logements, et plus particulièrement ne pas laisser échapper cette dernière lors de l'opération. Une telle opération de pré-fixation permet notamment de centrer convenablement la ferrure 2 par rapport au cadre grâce aux points de repère que constituent les logements 3A, 3B. En outre, on peut ainsi stabiliser la ferrure 2 lors de sa fixation du fait qu'elle se trouve coincée, prise en sandwich, entre l'embout de ferrage 14 et ledit cadre 3.

L'acheminement de la ferrure 2 depuis le magasin de ferrures 25 jusqu'au cadre 3 s'effectue donc de préférence en deux temps : dans un premier temps, le bras robotisé 10 déplace la tête 11 de manière à venir positionner celle-ci (donc le moyen de préhension 6), en vis-à-vis du cadre 3, légèrement en retrait de la surface destinée à accueillir la ferrure 2, puis, dans un deuxième temps, l'embase 12 est rapprochée du cadre à l'aide du moyen de déplacement différentiel 37, selon le mouvement d'avance V_{A}, tandis que la tête 11 reste immobile, jusqu'à ce que la ferrure 2 se trouve plaquée contre le cadre 3 ou emmanchée dans ce dernier, le cadre 3 se retrouvant alors pincé entre l'embout de ferrage 14 et l'équerre de retenue 36.

Bien entendu, l'embout de ferrage 14 possédera à cet effet une zone frontale suffisamment dégagée pour présenter la ferrure 2 en saillie et autoriser la mise au contact directe de ladite ferrure 2 contre le cadre 3, sans interférer avec ce dernier.

Ensuite, le procédé de ferrage comporte une étape (d) de montage au cours de laquelle on fixe la ferrure 2 au cadre 3.

Tel que cela est illustré sur la figure 4D, ladite fixation peut notamment intervenir par vissage à l'aide d'une lame rotative de tournevis 34 qui vient traverser l'embout de ferrage 14 au niveau de la lumière 35 de manière à manoeuvrer une vis qui comprime la ferrure 2 contre le cadre 3.

Ainsi, on peut avantageusement solidariser la ferrure 2 au cadre 3 dans la continuité du mouvement de positionnement, sans avoir à modifier ou relâcher la prise (ou la pression) exercée par le bras de positionnement 5, et plus particulièrement par le moyen de préhension 6, sur ladite ferrure 2, et par conséquent sans risquer d'altérer la position de ladite ferrure 2 sur ledit cadre 3 au moment de sa fixation définitive. L'opération de ferrage est ainsi particulièrement sûre et reproductible.

Toutefois, selon une autre variante de mise en oeuvre, l'étape (c) de pose peut comporter une sous-étape (c1) de pré-fixation au cours de laquelle on attache de manière non définitive la ferrure 2 au cadre 3, de préférence par emmanchement ou encliquetage des pattes 2A, 2B dans des logements 3A, 3B correspondants, puis une sous-étape (c2) de dégagement au cours de laquelle on fait passer le moyen d'accouplement 15 de sa configuration de fixation à sa configuration de largage, en désactivant l'électroaimant, de sorte à dégager la tête 11 en libérant l'embout de ferrage 14 et en abandonnant ledit embout de ferrage 14 sur le cadre 3 auquel il est maintenu par la ferrure 2 elle-même.

A ce titre, il est remarquable que l'usage d'un électroaimant comme moyen d'accouplement 15 permet une séparation immédiate et sans effort qui ne modifie pas la position conférée à la ferrure 2 lors de la pré-fixation.

Cette opération permet avantageusement d'alléger et d'affiner au maximum la tête 11, de réduire l'encombrement de celle-ci et de dégager le moyen de montage 32, afin d'autoriser le libre accès de ce dernier aux zones les plus exiguës du cadre 3, telles que les coins.

Selon cette variante de mise en oeuvre, l'étape (d) de montage comprend alors une sous-étape (d1) de fixation proprement dite, au cours de laquelle on solidarise définitivement la ferrure 2 au cadre 3, de préférence par vissage, puis une sous-étape (d2) de reprise de l'embout au cours de laquelle on vient repositionner l'embase 12 en vis-à-vis de l'embout de ferrage 14 et réactiver l'électroaimant de sorte à fixer de nouveau ledit embout de ferrage 14 au bras de positionnement 5.

De préférence, le procédé de ferrage comprend ensuite, quelle que soit la variante de mise en oeuvre retenue parmi celles susmentionnées, une étape (e) de libération, postérieure à l'étape (d) de montage, au cours de laquelle on éloigne le bras de positionnement 5 du cadre 3 de sorte à déloger à force du moyen de préhension 6 la ferrure 2 fixée au cadre 3.

En d'autres termes, tel que cela est illustré sur la figure 4E, l'embase 12 effectue un mouvement de recul V_{R}, de sens opposé au mouvement d'avance V_{A}, ce qui tendrait normalement à dégager la ferrure 2 hors du cadre 3, du fait que ladite ferrure est toujours coincée dans l'empreinte 21 par la clenche 23. Cependant, la fixation par vis de ladite ferrure 2 sur ledit cadre 3 s'oppose à ce mouvement de recul, et engendre, par réaction, un effort de séparation F_{S} qui agit, par l'intermédiaire de la ferrure 2, à l'encontre de la clenche 23 et conduit celle-ci à se rétracter en comprimant le ressort 24. Ceci a pour effet d'arracher la ferrure 2 à l'empreinte 21, tandis que ladite ferrure 2 reste accrochée au cadre 3.

Il est remarquable que la sous-étape (a0) d'initialisation est facultative, le cycle formé par la succession des étapes (b) de collecte, (c) de pose, (d) de montage et (e) de libération pouvant être répété de manière à déposer plusieurs ferrures du même type sur un ou plusieurs cadres différents, en conservant à chaque cycle le même embout de ferrage 14.

En outre, le procédé de ferrage peut comprendre, préférentiellement en tant que sous-étapes de l'étape (c) de pose, une étape (f) de définition d'un repère relatif au cours de laquelle on identifie, à l'aide d'un moyen de repérage spatial relatif 40, un élément particulier du cadre 3 et l'on associe audit cadre 3 un repère relatif dont ledit élément particulier constitue le point d'origine, ainsi qu'une étape (g) de déplacement relatif au cours de laquelle on déplace le bras de positionnement. 5, et plus précisément le moyen de préhension 6, par rapport audit point d'origine selon une direction, un sens et une distance prédéterminés (consigne de décalage).

De préférence l'étape (f) de définition d'un repère relatif comprendra une phase (f1) de balayage au cours de laquelle on balaiera, à l'aide du faisceau issu d'un organe de détection de type capteur laser, le cadre 3, de manière à détecter la transition marquée par une feuillure 43.

De préférence, l'identification du point d'origine lors de l'étape (f) et le déplacement du bras de positionnement 5 lors de l'étape (g) s'effectueront selon un même mouvement, dans une direction sensiblement parallèle au plan principal d'extension P du cadre 3.

Plus précisément, en considérant que le cadre 3 est disposé verticalement sur le support 4, on peut faire partir la tête 11 d'une position de départ située sous la traverse inférieure du cadre 3, puis déplacer ladite tête grâce au bras 10 selon une direction verticale ascendante parallèle au plan P jusqu'à ce que le faisceau laser détecte l'arête de la feuillure inférieure, puis décaler verticalement la tête 11, dans le prolongement du mouvement amorcé, d'une valeur de consigne correspondant à la « *latitude* » nominale à laquelle la ferrure 2 doit être positionnée par rapport à ladite feuillure inférieure. Ensuite, une fois la latitude nominale atteinte, la tête effectue un déplacement latéral sensiblement horizontal et toujours parallèle au plan P, vers la droite (respectivement vers la gauche), jusqu'à la détection de la feuillure droite (respectivement gauche), puis prolonge son mouvement d'une valeur de consigne latérale correspondant à la « *longitude* » nominale à laquelle la ferrure 2 doit être positionnée par rapport à ladite feuillure droite (respectivement gauche).

Le procédé de ferrage permet ainsi avantageusement de définir successivement, en deux ou trois dimensions, les coordonnées de pose de la ferrure 2 dans un repère associé au cadre 3, en assignant au bras de positionnement 5 une consigne de déplacement selon un axe connu à partir de chaque point d'origine, de manière à décaler ledit bras 5 par pas successifs prédéfinis.

Bien entendu, le procédé de ferrage peut être en tout ou partie automatisé, et notamment informatisé. A cet effet, la présente divulgation concerne également un programme informatique qui comprend un moyen de code de programme informatique adapté pour exécuter une ou plusieurs des étapes susmentionnées d'un procédé de ferrage de menuiseries lorsque ledit programme est exécuté sur un ordinateur.

Bien entendu, l'invention concerne également un support pouvant être lu par un ordinateur et sur lequel est enregistré un tel programme, ainsi que la mise en oeuvre d'un tel programme informatique sur un support lisible par un ordinateur.

Plus spécifiquement, le programme informatique sera capable de piloter les mouvements d'un bras de positionnement 5 par rapport à un magasin d'embouts de ferrage 16 et de contrôler le moyen d'accouplement 15 de manière à permettre la réalisation automatique d'un échange d'embouts de ferrage 14 en fonction d'une consigne définissant le modèle de ferrure 2 à poser.

Ainsi, le dispositif permet avantageusement de créer un poste de ferrage particulièrement compact et simple tant dans sa structure que dans son organisation.

De façon particulièrement avantageuse, un tel dispositif s'avère polyvalent, dans la mesure où il dispose d'un choix de ferrures à poser qui correspond à son stock préexistant d'embouts de ferrage 14, et surtout évolutif dans la mesure où l'on peut accroître le nombre de modèles de ferrures et d'embouts de ferrage correspondants mis à sa disposition, une telle évolution se faisant à moindre coût sans occasionner de changement structurel majeur au niveau du poste de ferrage.

De surcroît, le dispositif est très avantageusement adapté aussi bien au ferrage de dormants qu'au ferrage d'ouvrants, et plus particulièrement à la préhension et à la manipulation de ferrures correspondant à ces deux familles distinctes de cadres de menuiseries, et peut alterner sa production sans avoir à subir de modification substantielle de sa structure. Il présente donc un avantage certain par rapport aux machines de l'art antérieur dont le champ d'application est systématiquement restreint soit au ferrage exclusif d'ouvrants, soit au ferrage exclusif de dormants.

Ainsi, en conjuguant polyvalence, évolutivité et rapidité d'exécution, le dispositif affranchit avantageusement l'utilisateur de tout investissement industriel lourd, quelles que soient les exigences de sa production.

### POSSIBILITE D'APPLICATION INDUSTRIELLE

L'invention trouve son application industrielle dans la conception, la réalisation et la mise en oeuvre de machines de ferrage de menuiseries.

## Revendications

1. Dispositif de ferrage de menuiseries (1) destiné à la pose de ferrures (2), telles que des crémones, paumelles ou gâches, sur des cadres (3) d'éléments de menuiseries, tels que des dormants ou des ouvrants de portes ou de fenêtres, ledit dispositif comprenant :
- un support de cadre (4) agencé pour maintenir le cadre à ferrer (3),
- un bras de positionnement (5) pourvu d'un moyen de préhension (6) apte à saisir une ferrure (2) en vue de sa pose sur ledit cadre (3), ledit bras de positionnement (5) étant conçu pour positionner le moyen de préhension (6) par rapport au cadre (3) de telle sorte que la ferrure (2) tenue par ledit moyen de préhension (6) se présente en regard d'un emplacement prédéterminé dudit cadre (3) prévu pour recevoir ladite ferrure,
ledit dispositif étant **caractérisé en ce que** le bras de positionnement (5) est formé par un bras robotisé (10) à six axes, et conçu pour pouvoir aborder le cadre (3) aussi bien par l'intérieur que par l'extérieur et poser des ferrures (2) aussi bien sur la face que sur l'un des chants dudit cadre (3), et **en ce que** le moyen de préhension (6) comporte une embase (12) solidaire du bras de positionnement (5) ainsi qu'un embout de ferrage (14) et un moyen d'accouplement (15) réversible conçu pour adopter alternativement une configuration de fixation, dans laquelle il associe à l'embase (12) l'embout de ferrage (14), lequel est spécifiquement adapté à la préhension d'un type particulier de ferrure (2), et une configuration de largage, dans laquelle il autorise la séparation dudit embout de ferrage (14) de ladite embase (12), de telle sorte que le moyen de préhension (6) peut évoluer, selon le choix de l'embout de ferrage (14), en plusieurs configurations de préhension, chaque configuration de préhension étant spécifiquement adaptée à la préhension d'un type particulier de ferrure (2) qui diffère par sa forme et/ou ses dimensions du ou des autres types de ferrures (2) auxquels correspondent la ou les autres configurations de préhension.

2. Dispositif selon la revendication 1 **caractérisé en ce que** le moyen d'accouplement (15) comprend un électroaimant agencé pour, lorsqu'il est activé, maintenir l'embout de ferrage (14) plaqué contre l'embase.

3. Dispositif selon l'une des revendications précédentes **caractérisé en ce qu'**il comprend un moyen de montage (32), tel qu'une visseuse, embarqué sur le bras de positionnement (5) et agencé de sorte à permettre la fixation de la ferrure (2) au cadre (3), ledit moyen de montage (32) et le moyen de préhension (6) étant agencés pour permettre de choisir l'embout de ferrage (14) sans avoir à changer de moyen de montage (32).

4. Dispositif selon l'une des revendications précédentes **caractérisé en ce que** l'embout de ferrage (14) présente une empreinte (21) de forme sensiblement conjuguée à celle du type de ferrure (2) à poser.

5. Dispositif selon l'une des revendications précédentes **caractérisé en ce que** l'embout de ferrage (14) est pourvu d'un organe de verrouillage (22), de type clip, agencé pour engager la ferrure (2) lors de la préhension de cette dernière de manière à s'opposer à la séparation de ladite ferrure (2) et dudit embout de ferrage (14), et **en ce que** ledit organe de verrouillage (22) est réversible sous la contrainte, de telle sorte qu'il puisse libérer la ferrure (2) lorsqu'un effort de séparation (F_{S}) supérieur à une valeur prédéterminée (F_{S0}) est exercé sur ladite ferrure (2).

6. Dispositif selon les revendications 4 et 5 **caractérisé en ce que** l'organe de verrouillage (22) comporte une clenche (23) précontrainte par un organe élastique (24), du genre poussoir à bille, ladite clenche (23) faisant saillie sur la surface de la paroi de l'empreinte (21) de manière à pouvoir coopérer avec la surface de la ferrure (2) lorsque cette dernière est insérée dans ladite empreinte (21).

7. Dispositif selon l'une des revendications précédentes **caractérisé en ce qu'**il dispose d'un magasin de ferrures (25) disposant d'une aire de stockage (26) contenant un ou plusieurs exemplaires d'un ou plusieurs types de ferrures (2) déterminés, ledit magasin de ferrures (25) étant agencé pour être accessible au moyen de préhension (6) et ladite aire de stockage (26) comportant une pluralité de réservoirs formés par des goulottes (30).

8. Dispositif selon l'une des revendications précédentes **caractérisé en ce qu'**il dispose d'un magasin de ferrures (25) disposant d'une aire de stockage (26) contenant un ou plusieurs exemplaires d'un ou plusieurs types de ferrures (2) déterminés, ledit magasin de ferrures (25) étant agencé pour être accessible au moyen de préhension (6) et disposant d'un moyen de chargement (31) apte à transférer une ferrure (2) depuis l'aire de stockage (26) jusqu'au moyen de préhension (6).

9. Dispositif selon l'une des revendications précédentes **caractérisé en ce qu'**il possède un moyen de contrôle (17) apte à piloter automatiquement l'évolution du moyen de préhension (6) d'une configuration de préhension à l'autre.

10. Dispositif selon l'une des revendications précédentes **caractérisé en ce qu'**il comprend un moyen de montage (32), tel qu'une visseuse, ledit moyen de montage (32) étant embarqué sur le bras de positionnement (5), situé sensiblement dans l'alignement de la ferrure (2) et du moyen de préhension (6), et monté mobile par rapport à ce dernier et agencé de sorte à permettre la fixation de la ferrure (2) au cadre (3) lorsque ladite ferrure (2) se trouve positionnée sur ledit cadre (3) par le moyen de préhension (6).

11. Dispositif selon l'une des revendications précédentes **caractérisé en ce que** l'embase (12) est intégrée à une tête (11) fixée au bras de positionnement (5), ladite tête (11) étant pourvue d'un moyen de retenue (36) permettant son arrimage sur le cadre (3), du genre équerre de crochetage, ainsi que d'un moyen de déplacement différentiel (37) autorisant le déplacement de l'embase (12) par rapport audit moyen de retenue (36).

12. Procédé de ferrage de menuiseries destiné à être mis en oeuvre au sein d'un dispositif de ferrage de menuiseries comprenant un bras de positionnement (5) pourvu d'un moyen de préhension (6) apte à saisir une ferrure (2) en vue de sa pose sur un cadre (3) d'élément de menuiserie, ledit procédé étant **caractérisé en ce que** le bras de positionnement (5) est formé par un bras robotisé (10) à six axes, et conçu pour pouvoir aborder le cadre (3) aussi bien par l'intérieur que par l'extérieur et poser des ferrures (2) aussi bien sur la face que sur l'un des chants dudit cadre (3), et **en ce qu'**il comporte une étape (a) de configuration du moyen de préhension (6), ladite étape (a) de configuration du moyen de préhension comprenant une sous-étape (a1) de sélection au cours de laquelle on sélectionne, parmi une pluralité d'embouts de ferrage disponibles, un embout de ferrage (14) particulier correspondant à la ferrure (2) à poser, ainsi qu'une sous-étape (a2) d'assemblage au cours de laquelle on fixe l'embout de ferrage (14) sélectionné lors de la sous-étape (a1) sur une embase (12) solidaire du bras de positionnement (5) à l'aide d'un moyen d'accouplement (15) réversible, de sorte à conférer au moyen de préhension (6) une configuration de préhension spécifique choisie parmi une pluralité de configurations de préhension possibles, chacune desdites configurations de préhension étant spécifiquement adaptée à la préhension d'un type particulier de ferrure (2) qui diffère par sa forme et/ou ses dimensions du ou des autres types de ferrures (2) auxquels correspondent la ou les autres configurations de préhension.

13. Support pouvant être lu par un ordinateur et sur lequel est enregistré un programme informatique comprenant un moyen de code de programme informatique adapté pour exécuter les étapes d'un procédé de ferrage conforme à la revendication 12 lorsque ledit programme est exécuté sur un ordinateur.

## Patentansprüche

1. Vorrichtung zum Beschlagen von Konstruktionsteilen (1), die zum Setzen von Beschlägen (2), wie etwa Drehstangenverschlüssen, Tür- bzw. Fensterbändern oder Schließblechen, an Rahmen (3) von Konstruktionselementen, wie etwa Einfassungen bzw. Tür- oder Fensterflügeln, bestimmt ist, wobei die Vorrichtung enthält:
- einen Rahmenhalter (4), der dazu angeordnet ist, den zu beschlagenden Rahmen (3) zu halten,
- einen Positionierungsarm (5), der mit einer Greifeinrichtung (6) versehen ist, die dazu geeignet ist, einen Beschlag (2) zum Setzen auf den Rahmen (3) zu ergreifen, wobei der Positionierungsarm (5) dazu ausgelegt ist, die Greifeinrichtung (6) bezüglich des Rahmens (3) so zu positionieren, dass der von der Greifeinrichtung (6) gehaltene Beschlag (2) einer vorbestimmten Stelle des Rahmens (3) gegenüber zu liegen kommt, die dazu vorgesehen ist, den Beschlag aufzunehmen,
wobei die Vorrichtung **dadurch gekennzeichnet ist, dass** der Positionierungsarm (5) aus einem Roboterarm (10) mit sechs Achsen gebildet und dazu ausgelegt ist, den Rahmen (3) sowohl von innen als auch von außen anfahren zu können und Beschläge (2) sowohl auf eine Seitenfläche als auch auf eine der Stirnflächen des Rahmens (3) setzen zu können, und dass die Greifeinrichtung (6) ein Basisteil (12) enthält, das fest mit dem Positionierungsarm (5) verbunden ist, sowie ein Setzendstück (14) und eine Einrichtung (15) zur reversiblen Kopplung, die dazu ausgelegt ist, alternativ eine Befestigungskonfiguration, in welcher sie dem Basisteil (12) das Setzendstück (14) zuordnet, das spezifisch auf das Ergreifen eines bestimmten Typs von Beschlag (2) ausgelegt ist, und eine Abwurfkonfiguration einzunehmen, in welcher sie das Trennen des Setzendstücks (14) vom Basisteil (12) gestattet, so dass die Greifeinrichtung (6) je nach Wahl des Setzendstücks (14) in mehrere Greifkonfigurationen gebracht werden kann, wobei jede Greifkonfiguration spezifisch auf das Ergreifen eines bestimmen Typs von Beschlag (2) ausgelegt ist, der sich in Form und/oder Abmessungen von dem weiteren Typ bzw. von den weiteren Typen von Beschlägen (2) unterscheidet, denen die weitere bzw. die weiteren Greifkonfiguration(en) entsprechen.

2. Vorrichtung nach Anspruch 1, **dadurch gekennzeichnet, dass** die Kopplungseinrichtung (15) einen Elektromagneten enthält, der dazu angeordnet ist, dann, wenn er aktiviert ist, das an das Basisteil angedrückte Setzendstück (14) zu halten.

3. Vorrichtung nach einem der vorangehenden Ansprüche, **dadurch gekennzeichnet, dass** sie eine Montageeinrichtung (32), wie etwa einen Schrauber, enthält, die an dem Positionierungsarm (5) mitgeführt wird und so angeordnet ist, dass sie das Befestigen des Beschlags (2) an den Rahmen (3) gestattet, wobei die Montageeinrichtung (32) und die Greifeinrichtung (6) dazu angeordnet sind, das Auswählen des Setzendstücks (14) zu gestatten, ohne dabei die Montageeinrichtung (32) wechseln zu müssen.

4. Vorrichtung nach einem der vorangehenden Ansprüche, **dadurch gekennzeichnet, dass** das Setzendstück (14) eine Vertiefung (21) aufweist, deren Form im Wesentlichen mit der des zu setzenden Beschlagtyps (2) übereinstimmt.

5. Vorrichtung nach einem der vorangehenden Ansprüche, **dadurch gekennzeichnet, dass** das Setzendstück (14) mit einem Verriegelungsorgan (22) vom Typ Clip versehen ist, das dazu angeordnet ist, den Beschlag (2) beim Ergreifen desselben so einzusetzen, dass er sich dem Trennen von Beschlag (2) und Setzendstück (14) widersetzt, und dass das Verriegelungsorgan (22) unter Vorspannung reversibel ist, so dass es den Beschlag (2) dann freigeben kann, wenn eine Trennkraft (F_{S}) höher als ein vorbestimmter Wert (F_{SO}) auf den Beschlag (2) ausgeübt wird.

6. Vorrichtung nach den Ansprüchen 4 und 5, **dadurch gekennzeichnet, dass** das Verriegelungsorgan (22) eine Klinke (23) enthält, die über ein Federorgan (24) vom Typ Kugelstößel vorgespannt ist, wobei die Klinke (23) an der Oberfläche der Wand der Vertiefung (21) so vorspringt, dass sie mit der Oberfläche des Beschlags (2) dann zusammenwirken kann, wenn letzterer in die Vertiefung (21) eingeführt ist.

7. Vorrichtung nach einem der vorangehenden Ansprüche, **dadurch gekennzeichnet, dass** sie über ein Beschlagmagazin (25) verfügt, das über eine Speicherfläche (26) verfügt, die ein oder mehrere Exemplare eines oder mehrerer bestimmter Typen von Beschlägen (2) beinhaltet, wobei das Beschlagmagazin (25) dazu angeordnet ist, für die Greifeinrichtung (6) zugänglich zu sein, und wobei die Speicherfläche (26) eine Mehrzahl von Reservoirs enthält, die aus Rinnen (30) gebildet sind.

8. Vorrichtung nach einem der vorangehenden Ansprüche, **dadurch gekennzeichnet, dass** sie über ein Beschlagmagazin (25) verfügt, das über eine Speicherfläche (26) verfügt, die ein oder mehrere Exemplare eines oder mehrerer bestimmter Typen von Beschlägen (2) beinhaltet, wobei das Beschlagmagazin (25) dazu angeordnet ist, für die Greifeinrichtung (6) zugänglich zu sein, und über eine Ladeeinrichtung (31) verfügt, die dazu geeignet ist, einen Beschlag (2) von der Speicherfläche (26) zur Greifeinrichtung (6) zu überführen.

9. Vorrichtung nach einem der vorangehenden Ansprüche, **dadurch gekennzeichnet, dass** sie eine Steuereinrichtung (17) besitzt, die dazu geeignet ist, den Übergang der Greifeinrichtung (6) von einer Greifkonfiguration in die andere automatisch zu steuern.

10. Vorrichtung nach einem der vorangehenden Ansprüche, **dadurch gekennzeichnet, dass** sie eine Montageeinrichtung (32), wie etwa einen Schrauber, enthält, wobei die Montageeinrichtung (32) an dem Positionierungsarm (5) mitgeführt wird, im Wesentlichen in Flucht mit dem Beschlag (2) und der Greifeinrichtung (6) liegt und bezüglich der letztgenannten beweglich gelagert und so angeordnet ist, dass sie das Befestigen des Beschlags (2) an den Rahmen (3) dann gestattet, wenn der Beschlag (2) sich über die Greifeinrichtung (6) am Rahmen (3) positioniert befindet.

11. Vorrichtung nach einem der vorangehenden Ansprüche, **dadurch gekennzeichnet, dass** das Basisteil (12) an einem Kopf (11) integriert ist, der an den Positionierungsarm (5) befestigt ist, wobei der Kopf (11) mit einer Halteeinrichtung (36) versehen ist, die dessen Sichern am Rahmen (3) gestattet und vom Typ Verhakungswinkel ist, sowie eine differenzielle Verlagerungseinrichtung (37), die die Verlagerung des Basisteils (12) bezüglich der Halteeinrichtung (36) gestattet.

12. Verfahren zum Beschlagen von Konstruktionsteilen, das dazu bestimmt ist, mit einer Vorrichtung zum Beschlagen von Konstruktionsteilen durchgeführt zu werden, die einen Positionierungsarm (5) enthält, der mit einer Greifeinrichtung (6) versehen ist, die dazu geeignet ist, einen Beschlag (2) zum Setzen auf den Rahmen (3) eines Konstruktionselements zu ergreifen, wobei das Verfahren **dadurch gekennzeichnet ist, dass** der Positionierungsarm (5) aus einem Roboterarm (10) mit sechs Achsen gebildet und dazu ausgelegt ist, den Rahmen (3) sowohl von innen als auch von außen anfahren zu können und Beschläge (2) sowohl auf eine Seitenfläche als auch auf eine der Stirnflächen des Rahmens (3) setzen zu können, und dass es einen Schritt (a) des Konfigurierens der Greifeinrichtung (6) umfasst, wobei der Schritt (a) des Konfigurierens der Greifeinrichtung einen Unterschritt (a1) des Auswählens umfasst, bei dem aus einer Mehrzahl von verfügbaren Setzendstücken ein bestimmtes Setzendstück (14) ausgewählt wird, das dem zu setzenden Beschlag (2) entspricht, sowie einen Unterschritt (a2) das Zusammenfügens, bei dem das in dem Unterschritt (a1) ausgewählte Setzendstück (14) mit Hilfe einer Einrichtung (15) zur reversiblen Kopplung an ein Basisteil (12) befestigt wird, das fest mit dem Positionierungsarm (5) verbunden ist, so dass der Greifeinrichtung (6) eine spezifische Greifkonfiguration verliehen wird, die aus einer Mehrzahl von möglichen Greifkonfigurationen ausgewählt ist, wobei jede der Greifkonfigurationen spezifisch auf das Ergreifen eines bestimmten Typs von Beschlag (2) ausgelegt ist, der sich in Form und/oder Abmessungen von dem weiteren Typ bzw. von den weiteren Typen von Beschlägen (2) unterscheidet, denen die weitere bzw. die weiteren Greifkonfiguration(en) entsprechen.

13. Datenträger, der von einem Computer ausgelesen werden kann und auf dem ein Computerprogramm abgespeichert ist, das eine Computerprogrammcodeeinrichtung enthält, die dazu ausgelegt ist, die Schritte eines Verfahrens zum Beschlagen nach Anspruch 12 auszuführen, wenn das Programm auf dem Computer ausgeführt wird.

## Claims

1. Hardware-fitting device (1) for joinery, intended for installing fittings (2), such as casement bolts, hinges or striker plates, on joinery element frames (3), such as door or window fixed or opening lights, said device comprising:
- a frame support (4) arranged to hold the frame to be fitted out (3),
- a positioning arm (5) provided with a gripping means (6) able to grip a fitting (2) with a view to placing it on said frame (3), said positioning arm (5) being designed to position the gripping means (6) with respect to the frame (3) so that the fitting (2) which is held by said gripping means (6) is presented facing a predetermined location on said frame (3) designed to receive said fitting,
said device being **characterised in that** the positioning arm (5) is formed by a six-axis robotic arm (10), and designed to be able to approach the frame (3) both from inside and from outside and to place fittings (2) both on the face and on one of the edges of said frame (3), and **in that** the gripping means (6) comprises a base (12) secured to the positioning arm (5) as well as a hardware-fitting end piece (14) and a reversible coupling means (15) designed to adopt alternately a fixing configuration in which it associates with the base (12) the hardware-fitting end piece (14) that is specifically adapted to the gripping of a particular type of fitting (2), and a release configuration in which it allows the separation of said hardware-fitting end piece (14) from said base (12), so that the gripping means (6) can, depending on the choice of hardware-fitting end piece (14), change to a plurality of gripping configurations, each gripping configuration being specifically suited to the gripping of a particular type of fitting (2) that differs through its shape and/or dimensions from the other type or types of fitting (2) to which the other gripping configuration or configurations correspond.

2. Device according to claim 1, **characterised in that** the coupling means (15) comprises an electromagnet arranged, when it is activated, to keep the hardware-fitting end piece (14) pressed against the base.

3. Device according to either of the preceding claims, **characterised in that** it comprises an assembly means (32), such as a screwdriver, mounted on the positioning arm (5) and arranged so as to allow the fixing of the fitting (2) to the frame (3), said assembly means (32) and the gripping means (6) being arranged to make it possible to choose the hardware-fitting end piece (14) without having to change assembly means (32).

4. Device according to any of the preceding claims, **characterised in that** the hardware-fitting end piece (14) has a recess (21) with a shape substantially conjugate with that of the fitting (2) to be installed.

5. Device according to any of the preceding claims, **characterised in that** the hardware-fitting end piece (14) is provided with a locking member (22), of the clip type, arranged to engage the fitting (2) when the latter is gripped so as to oppose the separation of said fitting (2) and said hardware-fitting end piece (14), and **in that** said locking member (22) is reversible under force, so that it can release the fitting (2) when a separation force (F_{S}) greater than a predetermined value (F_{S0}) is exerted on said fitting (2).

6. Device according to claim 4 and claim 5, **characterised in that** the locking member (22) comprises a spring bolt (23) pre-stressed by an elastic member (24), of the ball pusher type, said spring bolt (23) projecting on the surface of the wall of the cavity (21) so as to be able to cooperate with the surface of the fitting (2) when the latter is inserted in said recess (21).

7. Device according to any of the preceding claims, **characterised in that** it has a fittings magazine (25) having a storage area (26) containing one or more examples of one or more given types of fitting (2), said fittings magazine (25) being arranged so as to be accessible to the gripping means (6) and said storage area (26) comprising a plurality of reservoirs formed by chutes (30).

8. Device according to any of the preceding claims, **characterised in that** it has a fittings magazine (25) having a storage area (26) containing one or more examples of one or more given types of fitting (2), said fittings magazine (25) being arranged so as to be accessible to the gripping means (6) and having a loading means (31) able to transfer a fitting (2) from the storage area (26) to the gripping means (6).

9. Device according to any of the preceding claims, **characterised in that** it has a control means (17) able to automatically control the change of the gripping means (6) from one gripping configuration to the other.

10. Device according to any of the preceding claims, **characterised in that** it comprises an assembly means (32), such as a screwdriver, said assembly means (32) being installed on the positioning arm (5), situated substantially in line with the fitting (2) and the gripping means (6), and mounted so as to be able to move with respect to the latter and arranged so as to allow the fixing of the fitting (2) to the frame (3) when said fitting (2) is positioned on said frame (3) by the gripping means (6).

11. Device according to any of the preceding claims, **characterised in that** the base (12) is integrated in a head (11) fixed to the positioning arm (5), said head (11) being provided with a holding means (36) enabling it to be anchored on the frame (3), of right-angled hooking type, and a differential movement means (37) allowing the movement of the base (12) with respect to said holding means (36).

12. Hardware-fitting method for joinery intended to be implemented in a hardware-fitting device for joinery comprising a positioning arm (5) provided with a gripping means (6) able to grip a fitting (2) with a view to placing it on a joinery element frame (3), said method being **characterised in that** the positioning arm (5) is formed by a six-axis robotic arm (10), and designed to be able to approach the frame (3) both from inside and from outside and to place fittings (2) both on the face and on one of the edges of said frame (3), and **in that** it comprises a step (a) of configuring the gripping means (6), said step (a) of configuring the gripping means comprising a selection substep (a1) during which, from a plurality of available hardware-fitting end pieces, a particular hardware-fitting end piece (14) corresponding to the fitting (2) to be placed is selected, and an assembly substep (a2) during which the hardware-fitting end piece (14) selected during substep (a1) is fixed on a base (12) secured to the positioning arm (6) by means of a reversible coupling means (15), so as to confer on the gripping means (6) a specific gripping configuration chosen from a plurality of possible configurations, each of said gripping configurations being specifically suited to the gripping of a particular type of fitting (2) that differs through its shape and/or dimensions from the other type or types of fitting (2) to which the other gripping configuration or configurations correspond.

13. Medium able to be read by a computer and on which a computer program is recorded, comprising a computer program code means suitable for executing the steps of a hardware-fitting method according to claim 12 when said program is executed on a computer.
